# EUROPEAN PATENT SPECIFICATION

(11) **EP 3 740 390 B1**
(45) Date of publication and mention of the grant of the patent: **31.08.2022**
(21) Application number: 18836519.1
(22) Date of filing: 13.12.2018
(51) Int. Cl.: F16H 37/10, F16H 37/08

(54) **HYBRID WORK VEHICLE HAVING A CVT**
HYBRIDARBEITSFAHRZEUG MIT CVT
ENGIN DE CHANTIER HYBRIDE À TRANSMISSION À VARIATION CONTINUE

(30) Priority: 18.01.2018 IT 201800001308
(43) Date of publication of application: 25.11.2020
(73) Proprietor: Ecothea S.r.l., 10129 Torino (IT)
(72) Inventor: SOMA', Aurelio, 12038 Savigliano (CN) (IT)
(74) Representative: Mola, Edoardo
(86) International application number: PCT/IB2018/059994
(87) International publication number: WO 2019/142036

(56) References cited:
- EP-A1- 0 375 798
- WO-A1-2011/101726
- CN-A- 105 922 857
- JP-A- 2009 241 830
- US-A1- 2017 001 630

## Description

### TECHNICAL FIELD

The present invention relates to a hybrid work vehicle having a CVT, in particular either a construction equipment vehicle, or an agricultural vehicle or a mixed use vehicle such as a vehicle having a lifting boom or front loader.

### STATE OF THE ART

There is no standard solution for the optimal size ratio of the internal combustion engine and the electric system, and the best choice includes complex trade-offs between the power as well as between cost and performance. The power train configuration of a hybrid electric vehicle (HEV) can be divided into three types: series, parallel, and a combination of the two. Series hybrid electric vehicles (SHEV) involve an internal combustion engine (ICE), generator, battery packs, capacitors and electric motors. SHEV has no mechanical connections between the ICE and the wheels. The series hybrid configuration is mostly used in heavy vehicles, military vehicles, and buses.

In a PHEV, mechanical and electrical powers are both connected to the driveline. In the case of parallel architectures, good performance during acceleration is possible because of the combined power from both engines. Different control strategies are used.

Moreover mechanical and electric power could be decoupled and the system has a high operating flexibility enabling three modes of operation: purely combustion; purely electric and hybrid.

In the series-parallel hybrid configuration can be highlighted two main power paths. In mechanical power path, the energy generated by the combustion engine is directly transmitted to the wheels while the electric path the energy generated by the thermal engine is converted first into electrical energy by means of the generator and then again converted to mechanical energy delivered at the wheels. It is possible therefore to have mixed architectures denominated "power splits" in which the installed power is divided by means of mechanical couplers. Combination of parallel and series hybrid configurations are further divided into sub-categories based on how the power is distributed.

For example, WO2011101726 relates to a parallel hybrid work vehicle comprising an internal combustion engine, a planetary gear having a sun gear connected to the internal combustion engine via a synchronizer, a traction electric machine connected in torque transfer to a ring gear of the planetary gear and an accessory electric machine to charge a battery when driven by the internal combustion engine or to drive a hydraulic pump for one or more hydraulic work device of the vehicle in a full electric mode. In particular, in such a full electric mode, the sun gear is braked and traction power is provided by the first electric machine via the ring gear. When the battery is low, the internal combustion engine is controlled to be switched on and connected to the sun gear via the synchronizer and a clutch.

US-A1-2013/0157808 describes a series hybrid work vehicle comprising a planetary gear, a first electric machine connected to a sun gear of the planetary gear and a second electric machine connected to a ring gear of the planetary gear. In particular, having the sun gear permanently connected to an electric machine, the drive provides a wider operational speed range and, substantially, is a two-engine unit attached to different gears of a CVT to provide an improved speed change device that can be used in a full electric mode of the work vehicle. Such document does not show how possible accessories, e.g. of a work vehicle, are driven.

EP-A1-1199204 discloses a parallel hybrid traction system of a tractor comprising a planetary gear to split and re-combinate the power from an internal combustion engine and a first and second electric machine. The tractor does not have a full electric work and traction mode.

EP-A2-1317050 discloses a parallel hybrid traction system of a tractor with particular attention to the overall volume of power train installation and comprising a planetary gear to re-combinate the power from an internal combustion engine and an electric machine. The tractor presents a full electric work switched by a hydraulic actuator and traction mode but, when the power train is off, no hydraulic power is available to start directly in fully electric mode, so a manual actuation is provided in order to switch to the full electric mode.

WO2011138308 discloses several embodiments of a series hybrid vehicle. However, in the embodiment of figure 11, an internal combustion engine, an electric motor and a differential are connected to a planetary gear in a nonseries embodiment. The document is specifically focused on driving a power take-off, to which both the internal combustion engine and the planetary gear are coupled, and there is no specific indication about how traction is provided via the planetary gear. Furthermore, the embodiment of figure 11 does not implement an important use of the vehicle, i.e. full electric functioning.

WO2011128772 discloses a series traction hybrid solution for telescopic vehicle including a parallel split for the working branch and a considering an embodiment with full-electric mode. The telescopic vehicle does not include a CVT equipment but the electric drive motor is directly connected to a traditional mechanical driveline.

Each of the above work vehicles optimizes a single aspect. However, a need is felt for an 'all round' work vehicle having a small-medium size and offering a full electric mode to e.g. travel and work inside a building such as a stall for cattle, providing a traditional internal combustion engine work and traction functioning at least in case of failure of one of the electric main components or while waiting for the maintenance thereof, and offering a wide speed range in order to work also in an open field at a certain speed.

Furthermore, a traditional work vehicle comprises a complex gearbox providing from three to more than 30 gearshifts, including travelling reduction or creep speed gears as well as a reduction gear for a power take-off. Such gearbox tends to be complex not suitable for automatic control and not devoted to reduce consumption but reduces the efficiency of the work vehicle.

### SCOPES AND OBJECTS OF THE INVENTION

The scope of the present invention is to provide a work vehicle that satisfies the above mentioned needs.

The scope of the present invention is achieved by a work vehicle according to claim 1. In particular, the planetary CVT gear drive avoids the need of a driver actuated clutch and a clutch pedal. The decoupler provides a full electric mode where the vehicle can travel and work having the internal combustion engine switched off. Both the torque of the internal combustion engine and that of the electric machine converge in the sun gear of the CVT gear drive and this provides a particularly fluid functioning in many working conditions, e.g. when the internal combustion engine is switched on to add its torque contribution to a previous full electric mode of the vehicle, e.g. when the battery has become low in use; or when there is a transition from a high torque-slow speed condition where the electric machine is a prime mover of the vehicle to a lower torque - higher speed condition where the electric actuator applies its high speed contribution. This is possible because maximum speed of electric machine considered including a possible gear ratio to the sun gear is lower than a maximum speed of the electric actuator including a possible gear ratio to the crown gear. Indeed the electric machine provides a substantial torque contribution and the electric actuator provides a substantial higher speed contribution.

Furthermore, the architecture provides a wide range of functions and is relatively simple and able to fit on a vehicle originally designed for an internal combustion engine having a total power comparable to that of the combination of the internal combustion engine and the electric machine of the present invention.

The work vehicle comprises a second planetary gear upstream to the CVT gear drive to provide additional controlling functions and increase seamlessness of torque transmission and split among the internal combustion engine, the electric machine, the hydraulic pump and the optional power take-off.

Preferably, the decoupler is a freewheel and this provides a simple and seamless, i.e. continuous, connection and disconnection of the internal combustion engine to the transmission in particular when the vehicle is travelling.

Preferably, the work vehicle has a control unit to provide a reduction gear mode and/or a multiplier mode via the CVT gear drive in order to provide the functions, including that of creep speed gears, of a traditional gearbox.

Preferably, the control unit is configured to adjust the angular speed of the power take-off and provide the requested vehicle speed via the actuator. A power take-off having an angular speed independent from that of the internal combustion engine provides an increased flexibility of working conditions.

Preferably, the above approach is also applied when the internal combustion engine is set in a charging condition to drive the electric machine and provide electric power to the electric storage unit and the speed of the vehicle, e.g. set by the user via the accelerator pedal, is controlled by the action of the actuator.

Preferably, the control unit is configured to start the vehicle from a stopped position only by the internal combustion engine and a suitable braking action applied on the ring gear by the actuator. Therefore, the tractor according to the invention can be used substantially as a traditional tractor with the internal combustion engine as the sole power source. This is useful in case of failure of electric components or where batteries are low and cannot be recharged.

Preferably, the combustion engine and the electric machine are in the engine compartment and at least the CVT gear drive and actuator are located below a driver's area or cockpit. In particular as an example, internal combustion engine 3 may have a power of about 50 kW and electric machine 1 may have a nominal power of about 50 kW and both can be housed in a compartment originally designed for an internal combustion engine of 100 kW.

Other advantages of the present invention are discussed in the description and cited in the dependent claims.

### BRIEF DESCRIPTION OF THE DRAWINGS

The invention is described in the following based on non limiting examples shown for explanation purposes in the attached drawings, which respectively refer to:
- Fig. 1 is a functional sketch of a work vehicle according to the first embodiment which does not include all features of the present invention;
- Fig. 2 is a torque diagram over vehicle speed of a vehicle according to figure 1;
- Fig. 3 is an efficiency map of a diesel internal combustion engine;
- Fig. 4 is a functional sketch of a work vehicle according to a second embodiment which does not include all features of the present invention;
- Fig. 5 is a functional sketch of a work vehicle according to a third embodiment, only this embodiment falling within the scope of the present invention as defined in claim 1; and
- Fig. 6 is a sketch of a tractor showing a detailed layout of the present invention according to the embodiment of fig. 1.

### DETAILED DESCRIPTION OF THE INVENTION

### SCHEMATIC LAYOUT

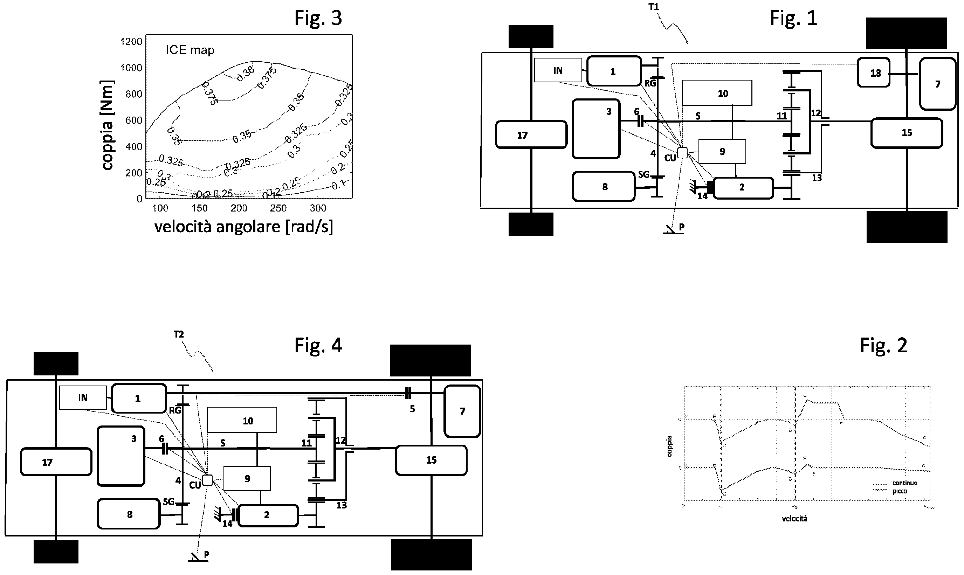

Figure 1 refers as a whole to a functional sketch of a tractor T1 comprising an electric machine 1 for traction, preferably a reversible electric machine, an electric rotary actuator 2 for speed control of the vehicle, and an internal combustion engine 3 to provide prime traction power together with electric machine 1. Tractor T1 further comprises a transmission unit 4 to connect in torque transfer electric machine 1 and internal combustion engine 3 so as to define a parallel hybrid traction system. Transmission unit 4 further comprises an angular decoupler 6, which can be either an actuated clutch or a free-wheel.

Vehicle T1 further comprises a power take-off 7 and a hydraulic pump 8 to provide hydraulic power for a work device or attachment, such as a lifting boom, a front loader, excavator, digger, agri-tractor, tele-handler. Hydraulic pump 8 is attached in torque transfer to transmission unit 4 so as to be driven either by electric machine 1 or by internal combustion engine 3 or both depending on the circumstances. In the non-limiting embodiment of figure 1, electric machine 1 is on a first branch of transmission unit 4 and hydraulic pump 8 is on a further branch of transmission unit 4, the first and second branch being in parallel with respect to decoupler 6.

Vehicle T1 further comprises power electric parts such as an inverter 9 to control actuator 2, an inverter IN to control electric machine 1 and a battery pack 10 receiving electric power from electric machine 1 and, according to a preferred embodiment, also from actuator 2. Furthermore, battery pack 10 powers electric machine 1 and actuator 2 when the respective action is needed.

Battery pack can be also plug-in recharged.

Vehicle T1 further comprises a planetary gear to continuously control the traction speed via the adjusting action of actuator 2. In particular, the planetary gear comprises a sun gear 11 attached, preferably in direct drive, to internal combustion engine 3 via a shaft S of transmission unit 4, a carrier 12 for satellite gears and a ring gear 13 attached to actuator 2. Shaft S defines an additional branch of transmission unit 4 in parallel to electric machine 1 and hydraulic pump 8 with respect to decoupler 6. In particular, electric machine 1 is attached via a reduction gear RG to shaft S when functioning as a motor, and preferably shaft S is attached to hydraulic pump 8 via a step-up gear SG. The combined speed ratio of the reduction gear RG and step-up gear SG when electric machine 1 drives hydraulic pump 8 is preferably 1 or above 1 but not greater than 2.

Actuator 2 regulates the traction speed by either blocking via a mechanical lock 14 or decelerating or accelerating ring gear 13 depending on the case, as will be explained in greater detail in the following pages. Furthermore, actuator 2 is connected to ring gear 13 via a reduction gear when actuator 2 accelerates ring gear 13. In particular, rotary actuator 2 is manufactured considering different performances with respect to those of electric machine 1. The output speed of reduction gear RG at the nominal speed of electric machine 1 ranges in +/- 30% of the maximum speed of internal combustion engine 3. In particular, if gear ratio of reduction gear RG is 0.5 and maximum speed of internal combustion engine 3 is 2500 rpm, nominal speed of electric machine 1 is between 4000-5000 rpm, so as to be in the same range, at the output of reduction gear RG, as that of internal combustion engine 3.

Actuator 2 comprises a rotary electric machine having a maximum speed so that a relative angular speed of ring gear 12 is higher than that of sun gear 11 at maximum speed of internal combustion engine 3 and/or at maximum speed of electric machine 1. In particular the maximum speed is the maximum speed in a continuous or design functioning condition. For example, considering a reduction gear ratio ranging from 0.7 to 0.5 between actuator 2 and ring gear 13 when actuator 2 drives ring gear 13, nominal speed of electric machine ranges from 6000 to 9000.

Actuator 2 also decelerates or locks ring gear 13 either via a mechanism, such as e.g. a disk brake, or via electronic control of a motor generator controlled by inverter 9. When the motor generator of actuator 2 applies a braking torque to ring gear 13, the generated electric power is stored in battery pack 10. Advantageously, locking of ring gear 13 is obtained mechanically so that vehicle T1 can travel and work with ICE power also by using hydraulic pump 8 in case of malfunctioning of electric power parts, or of low battery or of maintenance of electric/electronic power devices 1, 2, IN, 9, 10, connected for the functioning of transmission unit 4. According to a preferred embodiment, an angular locking mechanism 14 is attached to a rotor of the motor generator.

The reduction gear between the motor generator of actuator 2 and ring gear 13 helps to reduce the dimension of locking mechanism 14. For example, an axial gear fixed to the rotor meshes with a fixed axial gear to lock gear ring 13. According to a not-shown embodiment, actuator 2 comprises a mechanical or magnetic or hydraulic brake for deceleration of ring gear 13 and an electric motor for acceleration of ring gear 13. In all embodiments, reversing direction of rotation of actuator 2 defines a reverse motion of vehicle T1.

A control unit CU manages disconnection of decouplers 5 or 6; switching on/off of electric machine 1 and internal combustion engine 3 based on power required to charge battery pack 10, to drive power take-off 7; and braking/accelerating via actuator 2 based on a torque command, e.g. via a pedal P, or a speed command, e.g. via a cruise control system, by a user of tractor T1.

Preferably, as shown in figure 1, there is no gearbox having discrete shifts between internal combustion engine 3 and differential 15.

According to the embodiment of fig. 1, power take-off 7 is driven by a dedicated rotary actuator 18, e.g. either an electric motor powered by battery pack 10 and/or by electric machine 1; or a hydraulic motor powered by hydraulic pump 8. By properly controlling rotary actuator 18, the angular speed of power take-off 7 is decoupled by that of electric machine 1 and/or internal combustion engine 3.

### FUNCTIONING AT TRACTION

Figure 2 is a diagram showing the traction torque generated by the combination of electric machine 1, actuator 2 and internal combustion engine 3 over the speed range of vehicle T1 when no accessory, e.g. power take-off 7 or hydraulic pump 8, is driven and battery pack 10 is fully charged, e.g. not under charge. Fig. 2 plots vehicle speed versus driveline torque.

At start from braking or stop, torque is provided by electric machine 1 functioning as an electric motor. It is important to note that, to support such a function, nominal torque of electric machine 1 is higher than that of actuator 2. Inverter IN preferably controls electric machine 1 so that torque is independent from vehicle speed until a predefined vehicle speed, e.g. lower than 5 km/h. Preferably actuator 2 locks ring gear 13.

It is important to note that electric machine 1 may work at peak conditions over its design or continuous functioning condition and in particular at start from braking or stop. Peak functioning of electric motor 1 is provided by inverter IN that inputs a power electric current higher than the nominal electric current in order to provide a higher torque. Such a functioning mode can be kept only for a short amount of time, e.g. a few minutes, but helps to overcome peak load such as when there is an obstacle on the ground, e.g. a large rock, a short uphill road, a small cliff or the like.

As shown by figure 2, peak torque of electric machine 1 is higher than maximum torque of internal combustion engine 3. Preferably, peak torque of electric machine 1, at the output of reduction gear RG, is at least more 1.5-2 times maximum torque of internal combustion engine 3.

At a higher speed, e.g. above a predefined vehicle speed limit, preferably in the range 5-10 km/h, internal combustion engine 3 is switched on while ring gear 13 is locked. Electric machine 1 is either switched off, e.g. when battery pack 10 is fully charged, (lower line of figure 2) or functions as a generator to charge battery pack 10 and, at the same time, drive sun gear 11 when actuator 2 is configured to lock ring gear 13.

In case, battery pack 10 is already fully charged, torque output over vehicle speed is given in figure 2 between points C and D as a standard internal combustion engine work vehicle. In such a working condition, efficiency of internal combustion engine 3 changes depending on the external conditions and the position of accelerator pedal P.

Traction performance between points C' and D' of figure 2 is provided when electric machine 1 functioning as a motor provides a further torque up to the peak torque depending on the external load.

As a non-limiting example, when the driver sets the vehicle speed, a suitable angular speed of both electric machine 1, when batteries are sufficiently charged, and internal combustion engine 3 is reached. In particular, angular speed of internal combustion engine 3 is set by dimensional parameters, such as diameter of the wheels, and mechanical parameters, such as gear ration of differential 15, planetary gear etc. and angular speed of electric machine 1 combined with reduction gear RG is slightly lower, for each vehicle speed set by the driver, to that of internal combustion engine 3, e.g. no more than 10% lower, preferably no more than 5% lower. In such a condition, inverter IN controls electric machine 1 to keep constant the angular speed set via cruise control regardless the load applied on e.g. differential 15. Indeed, in case of a climb on a uphill, the load increase tends to slow down internal combustion engine 3 but is opposed by the action of electric machine 1 that, in order to keep its angular speed constant, would increase torque as necessary and until the peak value. The additional torque provided by electric machine 1 provides the same effect as a creep speed gear applied to a standard vehicle having an internal combustion engine only as a primary mover.

As a further example, control unit CU is programmed so that electric machine 1 shall provide torque to keep its own angular speed, which is set to be lower by a given parameter, preferably offset, than that of internal combustion engine 3 when the position of accelerator pedal P is modified. When internal combustion engine 3 slows down due to driveline load and pedal P is not released, e.g. a vehicle T1 is travelling on a uphill road, angular speed to be kept by electric machine is constant. As soon as the decreasing angular speed of internal combustion engine 3 under the increased load matches such angular speed, electric machine 1 provides a reaction torque to balance the increased external load and maintain its angular speed. This stops the unwanted deceleration of the vehicle.

In case speed request by the driver further increases, i.e. points from D to G in figure 2, control unit CU unlocks ring gear 13 and controls actuator 2 to function as a motor so that angular speed of carrier 12 is higher than angular speed of sun gear 11 via the contribution on ring gear 13 of actuator 2.

Therefore, between points D and G, there is a functioning condition wherein the speed increase of vehicle T1 via pedal P is given by the contribution of both sun gear 11 and ring gear 13.

Considering that there is a constant gear ratio between internal combustion engine 3 and sun gear 11, preferably a direct drive as shown in figure 1, this functioning condition substitute the gear shift for higher speeds, i.e. for speeds higher than that obtained by direct drive, of a traditional work vehicle.

Possibly, also at high speed ranges where angular speed of carrier 12 exceeds that of sun gear 11 due to contribution of actuator 2 via ring gear 13, control unit CU provides a signal so that electric machine 1 provides peak torque, as shown by upper line in figure 2, points D' to G'. In particular, peak functioning is also applicable to actuator 2, for example as shown between points D' and F' in figure 2.

Decreasing torque between F' and G' results from standard features of brushless electric machines when decrease of magnetic flux takes place during an increase of angular speed depending on the control of the inverter.

Contribution by actuator 2 may also be triggered by a fine angular speed adjustment of hydraulic pump 8. Such adjusting takes place via a manual command in the cockpit of vehicle T1. A user selected angular speed for traction of the vehicle provides a consequent sun gear angular speed. In case the driver provides a command, e.g. via accelerator pedal P, to further increase vehicle speed, control unit CU accelerates ring gear 13 via actuator 2 in order to satisfy the request.

Reverse travelling of vehicle T1 is obtained by unlocking a reversing angular speed of ring gear 13 via actuator 2 or, at a low vehicle speed, reversing the electric motor 1.

Other functioning conditions of vehicle T1 may be obtained according to a number of alternatives. The following provides a list of non-limiting preferred embodiments.

### CHARGING

Electric machine 1 is driven by internal combustion engine 3. In such an instance, a portion of torque from internal combustion engine 3 is absorbed by electric machine 1 and depends on the electric load set by control unit CU to charge battery pack 10 at a preferred rate and the remaining portion of torque drives sun gear 11 and differential 15.

According to a further preferred embodiment, control unit CU sets functioning conditions of internal combustion engine 3 in a maximum efficiency area of a functioning map of engine 3 (figure 3). Such condition applies for example when vehicle T1 is travelling at a constant speed on a flat path. In case of an acceleration transitory due e.g. to action by the driver on accelerator pedal P, control unit CU compounds traction power from internal combustion engine 3 and power inputted via ring gear 13 by actuator 2. This causes the angular speed of carrier 12 to exceed that of sun gear 11 due to the contribution of actuator 2 functioning as a motor via ring gear 13.

In particular, according to a preferred embodiment, additional torque on sun gear 11 caused by power inputted by actuator 2 via ring gear 13 is partially or completely compensated by a variation, in particular a decrease, of electric load on electric machine 1 functioning as a generator via a compensation signal from control unit CU. Such compensation signal is generated by control unit CU based on the angular position of accelerator pedal P and a status signal of internal combustion engine 3, i.e. either an angular speed signal that is constant or slowly increases when the driver accelerates vehicle T1 via accelerator pedal P or a torque signal showing a load increase on sun gear 11.

Preferably, actuator 2 may comprise an electric machine functioning as an generator to charge battery pack 10 when ring gear 13 is braked and has a nonzero angular speed. Battery pack can be also plug-in recharged.

### FULL ELECTRIC

According to a preferred embodiment, control unit CU is programmed so that, when receiving a command from the user via e.g. a selector, a button or the like in the cockpit of vehicle T1, preferably on a dashboard thereof, internal combustion engine 3 is switched off and any activity alone or in combination of work vehicle T1 is provided via electric machine 1, including in particular traction, activation of power take-off 7 and hydraulic pump 8, and control of actuator 2, in particular to accelerate ring gear 13 at a speed higher than that of sun gear 11.

When it is requested that vehicle T1 reaches a relatively high speed, i.e. via accelerator pedal P, central control unit CU is programmed so as to unlock ring gear 13 and power actuator 2 so that ring gear 13 reaches an angular speed higher than that of sun gear 11.

Preferably, such high speed functioning is triggered by the position of acceleration pedal P requesting a vehicle speed higher than that provided via electric machine 1. In particular, in full electric mode, control unit CU is programmed so that work position range of accelerator pedal P has a low speed position range, wherein vehicle speed is modified acting on electric machine 1 and a high speed position range, wherein vehicle speed is modified acting on actuator 2 and increasing the angular speed of carrier 12 via an acceleration of ring gear 13. For example, in low speed position range, ring gear 13 is locked and/or in high speed position range, sun gear 11 has a constant angular speed, preferably nominal angular speed.

Activation of hydraulic pump 8 when vehicle T1 is stopped is obtained by unlocking ring gear 13 so that the latter is not braked while electric machine 1 drives the relevant accessory.

### LOW BATTERY

According to a preferred embodiment, torque at start from braking or stop is provided by internal combustion engine 3. In particular, according to a preferred embodiment, the driver selects, e.g. via a lever in the cockpit or similar command, a neutral mode where control unit CU provides that ring gear 13 is unlocked and internal combustion engine 3 is on. When the driver selects a run mode, control unit CU is programmed to progressively brake ring gear 13 based on a status parameter of pedal P, e.g. the angular position of accelerator pedal P and/or the velocity and/or acceleration applied by the driver on accelerator pedal P, so as to increase the angular speed of carrier 12 when vehicle T1 starts from a stopped position. For example, ring gear 13 may be progressively braked from idle until locking.

It is important to note that, in case a high level of torque is required to e.g. climb out of a steep cliff, and the charge of battery pack 10 is low, the driver may keep vehicle T1 braked and let internal combustion engine 1 charge battery pack 10 via electric machine 1 functioning as a generator. In such a condition, actuator 2 is set so that ring gear 13 is freely rotating. When battery pack 10 is sufficiently charged, electric machine 1 is switched to function as a motor and provide its torque, if the case peak torque, to climb at a very low speed out of the steep cliff.

According to a preferred embodiment, control unit CU is programmed to provide a warning signal to the driver when charge level of battery pack 10 falls below a predefined threshold. Warning signal to the driver may be audio or visual warning or a combination of both. This is important in particular if electric machine 1 is providing a torque contribution when vehicle T1 is travelling on a steep uphill road in order to avoid that the driver is caught offguard and has time to decide how to drive vehicle T1 when electric machine 1 is temporarily unavailable.

Preferably, control unit CU is programmed so that, when charge level of battery pack 10 falls below a predefined safety threshold, power provided by electric machine 1 and/or actuator 2 decreases according to a predefined path until internal combustion engine 3 is the only power source. For example, output power of electric machine 1 and/or actuator 2 linearly decreases as a function of the charge level below the safety threshold.

### FURTHER EMBODIMENTS

Fig. 4 shows a functional sketch of a second embodiment, again not falling within the scope of the present invention as defined in claim 1, wherein elements functionally corresponding to features described in the above paragraphs will be indicated with the same reference numbers used above. In particular, work vehicle T2 differs from work vehicle T1 in what follows.

Power take-off 7 is selectively attached to transmission 4 via a decoupler 5 and decoupler 6 selectively connects internal combustion engine 3 to transmission unit 4 so that the electric machine 1, in a vehicle full electric mode of operation, drives both the vehicle and power take-off 7 while internal combustion engine 3 is switched off.

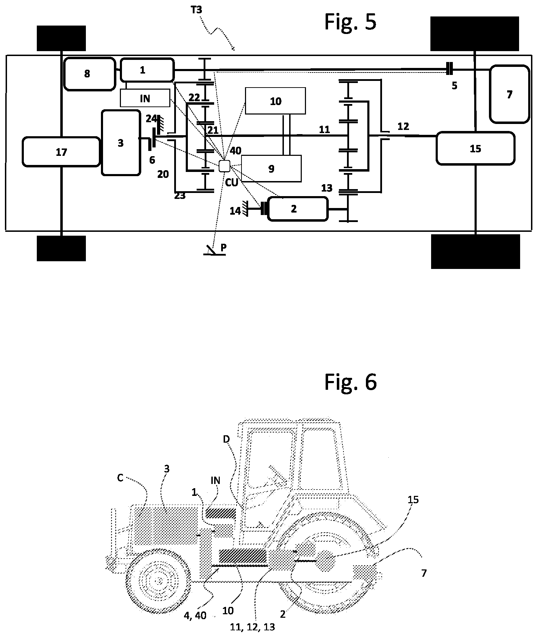

Furthermore, power take-off 7 is connected in series to electric machine 1 along the first branch. However, other connecting options are possible (see e.g. embodiment in fig. 5).

Contribution by actuator 2 may also be triggered by a fine angular speed adjustment of power take-off 7. Such adjusting takes place via a manual command in the cockpit of vehicle T2. A user selected angular speed for traction of the vehicle provides a consequent sun gear angular speed. In case the driver provides a command, e.g. via accelerator pedal P, to further increase vehicle speed, control unit CU accelerates ring gear 13 via actuator 2 in order to satisfy the request

Activation of power take-off 7 when vehicle T2 is stopped is obtained by unlocking ring gear 13 so that the latter is not braked while electric machine 1 drives the relevant accessory.

Fig. 5 shows a functional sketch of a third embodiment embodiment, which finally falls within the scope of the present invention as defined in claim 1, wherein elements functionally corresponding to features described in the above paragraphs will be indicated with the same reference numbers used above. In particular, work vehicle T3 differs from work vehicle T2 in what follows.

A transmission unit 40 comprises a further planetary gear 20 to connect in torque transfer internal combustion engine 3 to sun gear 11. Planetary gear 20 replaces the gear train RG and SG in figure 1. Planetary gear 20 has a sun gear 21 connected to sun gear 11, a carrier 22 connected to internal combustion engine 3 and a ring gear 23 connected to at least one, preferably all, from electric machine 1, power take-off 7 via decoupler 5 and hydraulic pump 8. According to the preferred embodiment shown in the figure 5, electric machine 1, power take-off 7 and hydraulic pump 8 are in series, preferably in direct coupling. Advantageously, to provide direct coupling, electric machine 1 has a through rotor coupled on one side to hydraulic pump 8 and on the other side to power take-off 7. When electric machine 1 drives ring gear 23, a reduction gear is provided

In order to provide a full electric mode, transmission unit 40 comprises a brake or a lock 24 for braking or locking carrier 22 when decoupler 6 disconnects internal combustion engine 3 from transmission unit 40. Remaining features of transmission unit 40 are in common with those of transmission unit 4.

In use, planetary gear 20 functions as a power split for power inputted by internal combustion engine 3 and electric machine 1 (in hybrid mode) and for power absorbed for traction or by electric machine 1 (during charging of battery pack 10). In particular power is allocated depending on the geometry, i.e. respective number of teeth, of planetary gear 20 regardless the dynamic functioning conditions.

In a full electric mode, carrier 22 is either locked or decelerated and planetary gear 20 functions as an ordinary gear train from electric machine 1 to sun gear 21. In one embodiment of vehicle T2, planetary gear 20 and planetary gear 11, 12, 13 are equal and also electric machine of actuator 2 and electric machine 1 have the same nominal features.

Both vehicles T1 and T2 may be 2-wheel driven (as shown in the figures) or 4-wheel driven by connecting differentials 15 and 17 by a suitable mechanism, such as a mechanism comprising shafts and omo-kinetic joints

### DETAILED LAYOUT

Figure 6 shows a schematic view of a tractor embodying one of the layouts in figures 1 or 4.

In particular, the tractor comprises a cooling block C, having at least a heat exchanger, in a frontal position inside an engine compartment, and internal combustion engine 3 is adjacent to cooling block C. Modular Cooling block C is designed to cool internal combustion engine 3, electric machine 1, actuator 2 and inverters 9 and IN. Engine compartment is delimited rearwards by a driver's area or cockpit D and at least one between inverter IN and electric machine 1, preferably both, is housed in the engine compartment between internal combustion engine 3 and cockpit K.

Battery pack 10, actuator 2 and planetary gear 11, 12, 13 are located below the driver's area D. Preferably, planetary gear 11, 12, 13 is located between battery pack 10 and differential 15. In particular, a traditional tractor comprises a complex and bulky gearbox for travel speeds and reduction of the power take-off. The planetary gear together with actuator 2 can fit in a compartment or a space originally designed for such a gearbox, which is eliminated.

## Claims

1. Hybrid work vehicle comprising:
- an electrical power storage unit having at least a battery energy storage device (10) and at least an inverter (9) to drive the electric machines;
- a hydraulic pump (8) for driving a hydraulic actuator;
- an internal combustion engine (3) for power traction, driving the hydraulic pump (8) and electrical charging of the electrical power storage unit (9, 10);
- a first electric machine (1) in parallel with the internal combustion engine (3) with respect to the hydraulic pump (8) and either powered by the electrical storage unit or providing electrical power to the storage unit (9, 10);
- a continuous velocity gear drive comprising:
* a planetary gear having a sun gear (11) to receive traction power from the internal combustion engine (3) and/or the first electric machine (1), a carrier (12) connected in torque transmission to a first differential (15) and a ring gear (13); and
*a rotary actuator (2, 14) connected in torque transmission to the ring gear (13) to control the speed of the carrier (12) in a reduction gear mode when the angular speed of the carrier (12) is lower than that of the sun gear (11) and a multiplication gear mode when the angular speed of the carrier (12) is higher than that of the sun gear (11);
- a transmission unit (4) comprising:
* a decoupler (6) to disconnect the internal combustion engine (3) from the sun gear (11) in a full electric mode of the vehicle;
* a first branch connectable to the internal combustion engine (3) via the decoupler (6) for torque transfer to and from the reversible electric machine (1);
* a connection to the hydraulic pump (8), so that the hydraulic pump (8) is drivable by internal the combustion engine (3) or the first electric machine (1) when the decoupler (6) rotationally disconnects the internal combustion engine (3) in the full electric mode of the vehicle;
*a second branch in parallel to the first branch with respect to the decoupler (6) to connect the internal combustion engine (3) and the sun gear (11); **characterized in that** the electric machine (1) and the electric actuator (2) are such that a first maximum speed of the electric machine (1) functioning as a motor applied at the sun gear (11) is lower than a second maximum speed of the electric actuator (2) applied at the ring gear (13)
and in further comprising:
* a further planetary gear having a further sun gear (21) connected to the second branch, a further carrier (22) connected to the decoupler (6) and a further ring gear (23) connected in torque transfer to the electric machine (1); and
* a brake or lock (24) for braking or locking the further carrier (22) in the full electric mode of the vehicle.

2. Work vehicle according to claim 1, comprising a power take-off (7) either powered by an actuator (18) independent from the transmission unit (4); or connected in parallel to said second branch with respect to the decoupler (6) so as to be driven by the electric machine (1) in the full electric mode of the vehicle or by the internal combustion engine (3).

3. Work vehicle according to any of the preceding claims, wherein the decoupler (6) is a freewheel.

4. Work vehicle according to any of the preceding claims, comprising a continuous variable gear drive control unit (CU) configured to provide a reduction gear mode of the continuous velocity gear drive where the angular speed of the carrier (12) is lower than that of the sun gear (11) via the actuator (2) and the electric machine (1) provides a reaction torque to maintain an angular speed set on the basis of an input by a driver when an external load on the continuous velocity gear drive or the transmission increases.

5. Work vehicle according to any of claims 1-3, comprising a control unit (CU) configured to provide a multiplier mode of the continuous velocity gear drive where the angular speed of the carrier (12) is higher than that of the sun gear (11) via the actuator (2) and to change the angular speed of the ring gear (13) via the actuator on the basis of an input from an accelerator pedal (P).

6. Work vehicle according to any of claims 1-3 when depending on claim 2, comprising a control unit (CU) configured to receive a drive input of a preferred angular speed of the power take-off (7), set accordingly the internal combustion engine (3) and/or the electric machine (1) to drive the power take-off (7) and control the vehicle speed via the actuator (2) on the basis of a driver input.

7. Work vehicle according to any of claims 1-3, comprising a control unit (CU) configured to start the vehicle from a stopped condition by progressively braking via the actuator (2) the ring gear (13) from idle based on an input from an accelerator pedal (P) when the internal combustion engine (3) is on.

8. Work vehicle according to any of claims 1-3, comprising a control unit (CU) configured to provide a charging mode wherein the electric machine (1) is driven by the internal combustion engine (3) to charge the electric power storage unit (9, 10) and the actuator (2) drives or brakes the ring gear (13) on the basis of an input generated by an accelerator pedal (P).

9. Work vehicle according to any of the preceding claims, comprising an engine compartment to house the internal combustion engine (3) between the electric machine (1) and a front heat exchanger of a cooling block (C) and wherein at least the actuator (2) and the planetary gear (11, 12, 13) are located below a driver's zone or cockpit (D).

## Patentansprüche

1. Hybrid-Arbeitsfahrzeug umfassend:
- eine elektrische Energiespeichereinheit mit mindestens eine Batterieenergiespeichereinrichtung (10) und mindestens einem Wechselrichter (9) zum Antreiben der elektrischen Maschinen;
- eine Hydraulikpumpe (8) zum Antreiben eines hydraulischen Aktuators;
- einen Verbrennungsmotor (3) zur Energietraktion durch Antreiben der Hydraulikpumpe (8) und der elektrischen Last der elektrischen Energiespeichereinheit (9, 10);
- eine erste elektrische Maschine (1) parallel zum Verbrennungsmotor (3) in Bezug auf die Hydraulikpumpe (8) und entweder von der elektrischen Speichereinheit angetrieben oder elektrische Energie an die Speichereinheit (9, 10) liefernd;
- ein stufenloses Getriebe, umfassend:
* ein Planetengetriebe mit einem Sonnenrad (11) zur Aufnahme von Traktionsenergie vom Verbrennungsmotor (3) und/oder von der ersten elektrischen Maschine (1), einen mit einem ersten Differenzial (15) drehmomentübertragend verbundene Träger (12) und ein Hohlrad (13); und
* ein Drehaktuator (2, 14), der zur Drehmomentübertragung mit dem Hohlrad (13) verbunden ist, um die Geschwindigkeit des Trägers (12) im Untersetzungsmodus desselben zu steuern, wenn die Winkelgeschwindigkeit des Trägers (12) niedriger ist als die des Sonnenrades (11) und einen Übersetzungsmodus desselben, wenn die Winkelgeschwindigkeit des Trägers (12) größer als die der Sonnenrades (11) ist;
- eine Übertragungseinheit (4), umfassend:
* einen Entkoppler (6) zum Trennen des Verbrennungsmotors (3) von dem Sonnenrad (11) in einem vollständig elektrischen Modus des Fahrzeugs;
* einen ersten Zweig, der durch den Entkoppler (6) mit dem Verbrennungsmotor (3) verbindbar ist, für die Drehmomentübertragung zu und von der reversiblen elektrischen Maschine (1);
* eine Verbindung zur Hydraulikpumpe (8), so dass die Hydraulikpumpe (8) durch den Verbrennungsmotor (3) oder die erste elektrische Maschine (1) antreibbar ist, wenn der Entkoppler (6) rotatorisch den Verbrennungsmotor (3) im vollelektrischen Betrieb des Fahrzeugs trennt;
*einen zweiten Zweig parallel zum ersten Zweig in Bezug auf den Entkoppler (6), um die Verbrennungsmotor (3) und das Sonnenrad (11) zu verbinden;
**dadurch gekennzeichnet, dass**
die elektrische Maschine (1) und der elektrische Aktuator (2) derart ausgeführt sind, dass eine auf das Sonnenrad aufgebrachte erste maximale Drehzahl der als Motor arbeitenden elektrischen Maschine (1) niedriger ist als eine zweite aufgebrachte maximale Drehzahl des Aktuators (2) zum Hohlrad (13)
und dass es auch umfasst:
* ein weiteres Planetengetriebe mit einem mit dem zweiten Zweig verbundenen weiteren Sonnenrad (21), einem mit dem Entkoppler (6) verbundenen weiteren Träger (22) und einem weiteren mit der elektrischen Maschine (1) drehmomentübertragend verbundenen Hohlrad (23); und
* eine Bremse oder ein Block (24) zum Bremsen oder Stoppen des weiteren Trägers (22) im vollelektrischen Modus des Fahrzeugs.

2. Arbeitsfahrzeug nach Anspruch 1, mit einer Zapfwelle (7), die entweder durch einen von der Getriebeeinheit (4) unabhängigen Aktuator (18) angetrieben wird; oder parallel zu dem zweiten Zweig in Bezug auf den Entkoppler (6) geschaltet ist, um von der elektrischen Maschine (1) im vollelektrischen Modus des Fahrzeugs oder von dem Verbrennungsmotor (3) angetrieben zu werden.

3. Arbeitsfahrzeug nach einem der vorhergehenden Ansprüche, bei dem der Entkoppler (6) ein Freilauf ist.

4. Arbeitsfahrzeug nach einem der vorangehenden Ansprüche, umfassend eine Steuereinheit (CU) für einen stufenlosen Getriebeantrieb, die so konfiguriert ist, dass sie einen Untersetzungsgetriebemodus des stufenlosen Getriebes bereitstellt, wenn die Winkelgeschwindigkeit des Trägers (12) niedriger als die des Sonnenrades (11) durch den Aktuator (2) und die elektrische Maschine (1) ein Reaktionsdrehmoment bereitstellt, um eine Winkelgeschwindigkeit beizubehalten, die basierend auf einer Eingabe durch einen Fahrer eingestellt ist, wenn eine externe Last auf das stufenlose Getriebe oder Getriebe zunimmt.

5. Arbeitsfahrzeug nach einem der Ansprüche 1-3, das eine Steuereinheit (CU) umfasst, die konfiguriert ist, um einen Übersetzungsmodus des stufenlosen Getriebes bereitzustellen, wenn die Winkelgeschwindigkeit des Trägers (12) größer ist als die des Sonnenrades (11) durch das Aktuator (2) und zum Ändern der Winkelgeschwindigkeit des Hohlrades (13) durch das Aktuator basierend auf einer Eingabe von einem Gaspedal (P).

6. Arbeitsfahrzeug nach einem der Ansprüche 1-3, wenn von Anspruch 2 abhängig, umfassend eine Steuereinheit (CU), die so konfiguriert ist, dass sie eine Antriebseingabe mit einer bevorzugten Winkelgeschwindigkeit von der Zapfwelle (7) empfängt, die entsprechend durch den Verbrennungsmotor (3) und/oder durch die elektrische Maschine (1), zum Antreiben der Zapfwelle (7) und zum Steuern der Geschwindigkeit des Fahrzeugs durch den Aktuator (2) basierend auf einer Fahrereingabe, eingestellt wird.

7. Arbeitsfahrzeug nach einem der Ansprüche 1-3, umfassend eine Steuereinheit (CU), die so konfiguriert ist, das Fahrzeug aus einem angehaltenen Zustand zu starten, indem sie das Hohlrad (13) aus dem Leerlauf basierend auf einer Eingabe durch den Aktuator (2) progressiv von einem Gaspedal (P) bremst, wenn der Verbrennungsmotor (3) eingeschaltet ist.

8. Arbeitsfahrzeug nach einem der Ansprüche 1-3, umfassend eine Steuereinheit (CU), die so konfiguriert ist, um einen Lademodus bereitzustellen, in dem die elektrische Maschine (1) durch den Verbrennungsmotor (3) angetrieben wird, um die Speichereinheit (9, 10) der elektrische Energie zu laden und der Aktuator (2) treibt oder bremst das Hohlrad (13) basierend auf einer Eingabe, die durch ein Gaspedal (P) erzeugt wird.

9. Arbeitsfahrzeug nach einem der vorhergehenden Ansprüche, umfassend einen Motorraum zum Unterbringen des Verbrennungsmotors (3) zwischen der Elektromaschine (1) und einem vorderen Wärmetauscher eines Kühlblocks (C) und wobei zumindest der Aktuator (2) und das Planetengetriebe (11, 12, 13) sich unterhalb eines Fahrbereichs oder Cockpits (D) befinden.

## Revendications

1. Véhicule de travail hybride comprenant :
- une unité de stockage d'énergie électrique comportant au moins un dispositif de stockage d'énergie à batterie (10) et au moins un onduleur (9) pour entraîner les machines électriques ;
- une pompe hydraulique (8) pour entraîner au moins un actionneur hydraulique ;
- un moteur à combustion interne (3) pour la traction d'énergie, par l'entraînement de la pompe hydraulique (8) et la charge électrique de l'unité de stockage d'énergie électrique (9, 10) ;
- une première machine électrique (1) en parallèle avec le moteur à combustion interne (3) par rapport à la pompe hydraulique (8) et soit alimentée par l'unité de stockage électrique, soit fournissant de l'énergie électrique à l'unité de stockage (9, 10) ;
- une transmission à vitesse continue comprenant :
* un engrenage planétaire ayant un équipement solaire (11) pour recevoir l'énergie de traction du moteur à combustion interne (3) et/ou de la première machine électrique (1), un support (12) relié en transmission de couple à un premier différentiel (15) et une couronne dentée (13); et
* un actionneur rotatif (2, 14) relié en transmission de couple à la couronne dentée (13) pour commander la vitesse du support (12) en mode démultiplicateur lorsque la vitesse angulaire du support (12) est inférieure à celle de l'équipement solaire (11) et un mode multiplicateur lorsque la vitesse angulaire du support (12) est supérieure à celle de l ?équipement solaire (11);
- une unité de transmission (4) comprenant :
* un découpleur (6) pour déconnecter le moteur à combustion interne (3) de l'équipement solaire (11) dans un mode entièrement électrique du véhicule ;
* une première branche connectable au moteur à combustion interne (3) par le découpleur (6) pour le transfert de couple vers et depuis la machine électrique réversible (1);
* une connexion à la pompe hydraulique (8), de sorte que la pompe hydraulique (8) est susceptible d'être entraînée par le moteur à combustion interne (3) ou la première machine électrique (1) lorsque le découpleur (6) déconnecte en rotation le moteur à combustion interne (3) en mode tout électrique du véhicule ;
*une deuxième branche parallèle à la première branche par rapport au découpleur (6) pour relier le moteur thermique (3) et l'engrenage solaire (11);
**caractérisé en ce que**
la machine électrique (1) et l'actionneur électrique (2) sont tels qu'une première vitesse maximale de la machine électrique (1) fonctionnant comme un moteur appliqué à l'engrenage solaire est inférieure à une deuxième vitesse maximale de l'actionneur (2) appliqué sur la couronne dentée (13), et
qu'elle comprend en outre :
* un ultérieur engrenage planétaire ayant un ultérieur engrenage solaire (21) relié à la deuxième branche, un ultérieur support (22) relié au découpleur (6) et une ultérieure couronne dentée (23) reliée avec transfert de couple à la machine électrique (1) ; et
* un frein ou bloc (24) pour freiner ou arrêter l'ultérieur support (22) dans le mode eintièrement électrique du véhicule.

2. Véhicule de travail selon la revendication 1, comprenant une prise de force (7) soit alimentée par un actionneur (18) indépendant de l'unité de transmission (4); ou connectée en parallèle à ladite deuxième branche par rapport au découpleur (6) pour être entraîné par la machine électrique (1) dans le mode tout électrique du véhicule ou par le moteur à combustion interne (3).

3. Véhicule de travail selon l'une quelconque des revendications précédentes, dans lequel lequel le découpleur (6) est une roue libre.

4. Véhicule de travail selon l'une quelconque des revendications précédentes, comprenant une unité de commande d'entraînement à engrenages à variation continue (CU) configurée pour fournir un mode d'engrenage de réduction de la transmission à vitesse continue où la vitesse angulaire du support (12) est inférieure à celle de l'engrenage solaire (11) par l'actionneur (2) et la machine électrique (1) fournit un couple de réaction pour maintenir une vitesse angulaire réglée sur la base d'une entrée par un conducteur lorsqu'une charge externe sur la transmission à vitesse continue ou la transmission augmente.

5. Véhicule de travail selon l'une quelconque des revendications 1-3, comprenant une unité de commande (CU) configurée pour fournir un mode multiplicateur de la transmission à vitesse continue où la vitesse angulaire du support (12) est supérieure à celle de l'engrenage solaire (11) par l'actionneur (2) et pour modifier la vitesse angulaire de la couronne dentée (13) par l'actionneur sur la base d'une entrée d'une pédale d'accélérateur (P).

6. Véhicule de travail selon l'une quelconque des revendications 1-3, lorsqu'elle dépend de la revendication 2, comprenant une unité de commande (CU) configurée pour recevoir une entrée d'entraînement d'une vitesse angulaire préférée de la prise de force (7), réglée en conséquence par le moteur à combustion interne (3) et/ou par la machine électrique (1) pour entraîner la prise de force (7) et contrôler la vitesse du véhicule par l'actionneur (2) sur la base d'une entrée du conducteur.

7. Véhicule de travail selon l'une quelconque des revendications 1-3, comprenant une unité de commande (CU) configurée pour démarrer le véhicule à partir d'un état arrêté en freinant progressivement par l'actionneur (2) la couronne dentée (13) depuis le ralenti sur la base d'une entrée d'un d'une pédale accélérateur (P) lorsque le moteur à combustion interne (3) est allumé.

8. Véhicule de travail selon l'une quelconque des revendications 1-3, comprenant une unité de commande (CU) configurée pour fournir un mode de charge dans lequel la machine électrique (1) est entraînée par le moteur à combustion interne (3) pour charger l'unité d'accumulation d'énergie électrique (9, 10) et l'actionneur (2) entraîne ou freine la couronne dentée (13) sur la base d'une entrée générée par une pédale d'accélérateur (P).

9. Véhicule de travail selon l'une quelconque des revendications précédentes, comprenant un compartiment moteur pour loger le moteur à combustion interne (3) entre la machine électrique (1) et un échangeur de chaleur avant d'un bloc de refroidissement (C) et dans lequel au moins l'actionneur (2) et l'engrenage planétaire (11, 12, 13) sont situés en dessous d'une zone de conduite ou cockpit (D).
